Europäisches Patentamt

European Patent Office

Office européen des brevets

(19)

(11) **EP 0 811 581 B1**

(12) **EUROPEAN PATENT SPECIFICATION**

(45) Date of publication and mention
of the grant of the patent:
**18.09.2002 Bulletin 2002/38**

(51) Int Cl.[7]: **C03C 3/087**, C03C 4/08

(21) Application number: **97109036.0**

(22) Date of filing: **04.06.1997**

(54) **Infrared radiation absorbing glass**

Infrarotstrahlung absorbierendes Glas

Verre absorbant rayons infrarouges

(84) Designated Contracting States:
**BE DE FR GB IT**

(30) Priority: **07.06.1996 JP 14528096**

(43) Date of publication of application:
**10.12.1997 Bulletin 1997/50**

(73) Proprietor: **NIPPON SHEET GLASS CO. LTD.**
**Chuo-ku Osaka-shi Osaka-fu (JP)**

(72) Inventors:
• **Sakaguchi, Koichi, Nippon Sheet Glass Co., Ltd.**
  **Osaka-shi, Osaka (JP)**
• **Seto, Hiromitsu,**
  **c/o Nippon Sheet Glass Co., Ltd.**
  **Osaka-shi, Osaka (JP)**
• **Nagashima, Yukihito,**
  **Nippon Sheet Glass Co., Ltd.**
  **Osaka-shi, Osaka (JP)**

(74) Representative:
**Hansen, Bernd, Dr. Dipl.-Chem. et al**
**Hoffmann Eitle,**
**Patent- und Rechtsanwälte,**
**Arabellastrasse 4**
**81925 München (DE)**

(56) References cited:
| | |
|---|---|
| EP-A- 0 561 337 | EP-A- 0 565 882 |
| EP-A- 0 604 314 | EP-A- 0 677 492 |
| EP-A- 0 709 344 | EP-A- 0 748 776 |
| US-A- 3 723 142 | US-A- 4 701 425 |
| US-A- 5 344 798 | US-A- 5 411 922 |

**Description**

FIELD OF THE INVENTION

The present invention relates to an infrared radiation absorbing glass having a high visible light transmission.

BACKGROUND OF THE INVENTION

From the standpoint in reduction of the load of air conditioning in automobiles, a glass having infrared absorbing power has recently been proposed as window panes of automobiles.

For example, greenish blue-tinted glass having a relatively high $Fe_2O_3$ content to exhibit improved infrared absorbing power has been developed for use in automobiles. A typical example of such a greenish blue-tinted infrared absorbing glass has a composition comprising, in % by weight: 71% $SiO_2$, 1.5% $Al_2O_3$, 4% MgO, 8.6t% CaO, 13.5% $Na_2O$, 0.7% $K_2O$, 0.55% total iron oxides in terms of $Fe_2O_3$, and 0.17 FeO in terms of $Fe_2O_3$ . The glass having this composition with a thickness of 4 mm has a visible light transmission of 78% as measured with the CIE standard illuminant A and a solar radiation transmission of 54%.

Glass having a bronze tint, on the other hand, contains $Fe_2O_3$ in an amount smaller than that in the greenish blue-tinted glass so as to have fair infrared absorbing power while maintaining visible light transmission. A typical example of infrared radiation absorbing glass having a bronze tint has a composition of, in % by weight: 72% of $SiO_2$, 1.5% $Al_2O_3$, 4% MgO, 8% CaO, 13.5% $Na_2O$, 0.7% $K_2O$, 0.24% total iron oxides in terms of $Fe_2O_3$, 0.054% of FeO in terms of $Fe_2O_3$, 0.001% CoO, and 0.001 wt% of Se. The glass having this composition with a thickness of 4 mm has a visible light transmission of 78% as measured with the CIE standard illuminant A and a solar radiation transmission of 70%

In the above-described conventional infrared radiation absorbing glass, its infrared absorbing power is imparted by $Fe^{2+}$ (FeO). However, if the FeO concentration in a greenish blue-tinted glass is increased in order to obtain higher infrared absorbing power, the absorption of FeO in the visible region increases, and as a result, there is particularly a problem that the visible light transmission required of windowpanes of vehicles cannot be obtained-. In a glass which forms a color utilizing absorption of Se in the visible region, such as bronze type glass, there is the problem that greater restriction is imposed on the FeO concentration, and a high infrared absorbing power is not obtained.

EP-A-0748776, constituting prior art in accordance with Article 54(3) EPC, discloses an ultraviolet and infrared radiation absorbing glass comprising, as basic glass components,

65 to 80% by weight of $SiO_2$,
0 to 5% by weight of $A\ell_2O_3$,
0 to 10% by weight of MgO,
5 to 15% by weight of CaO,
10 to 18% by weight of $Na_2O$,
0 to 5% by weight of $K_2O$,
5 to 15% by weight in total of MgO + CaO,
10 to 20% by weight in total of $Na_2O$ + $K_2O$, and
0 to 5% by weight of $B_2O_3$; and

as coloring components,

0.75 to 0.95% by weight, in terms of $Fe_2O_3$, of total iron oxide,.
1.2 to 1.4% by weight of $CeO_2$, and
0 to 0.5% by weight of $TiO_2$,

and satisfying the following equation:

$$(0.2 \times (CeO_2)-0.04) \leqq (FeO/T\text{-}Fe_2O_3) \leqq (0.2 \times (CeO_2)+0.08)$$

wherein ($CeO_2$) represents the amount of $CeO_2$ in terms of percent by weight, and ($FeO/T\text{-}Fe_2O_3$) represents the weight ratio of FeO in terms of $Fe_2O_3$ to the total iron oxide in terms of $Fe_2O_3$.

EP-A-0565882 discloses a neutral gray colored infrared and ultraviolet radiation absorbing glass comprising as coloring components, on a weight basis, 0.10 - 0.55% of total iron expressed as $Fe_2O_3$, 0.2 - 0.6% of $CeO_2$, 15-35 ppm of CoO and 2-18 ppm of Se.

US-A-3723142 discloses a neutral gray colored heat-absorbing glass consisting essentially of the following base components in percent by weight: 68 to 75% $SiO_2$, 0 to 5% $Al_2O_3$, 5 to 15% CaO, 0 to 10% MgO, 10 to 18% $Na_2O$, 0 to 5% $K_2O$, wherein CaO + MgO is 6 to 15% and $Na_2O + K_2O$ is 10 to 20%, together with coloring components of 0.18 to 0.22% $Fe_2O_3$ 0.0031 to 0.0040% CoO, 0.0006 to 0.0009% Se, and 0-0.0004% NiO.

## SUMMARY OF THE INVENTION

The present invention has been made in view of the above-described problems involved in the prior art.

An object of the present invention is to provide a method for producing a glass having a high infrared absorbing power and a high visible light transmission.

According to the present invention, there is provided a method for shifting the absorption peak wavelength in the wavelength range 900-1600 nm of an infrared absorbing glass from less than 1100 nm to 1100 nm or longer, comprising the step of irradiating the glass which comprises by wt.%:

65 to 80% $SiO_2$,
0 to 5% $Al_2O_3$,
0 to 10% MgO,
5 to 15% CaO,
10 to 18% $Na_2O$,
0 to 5% $K_2O$,
5 to 15% MgO + CaO,
10 to 20% $Na_2O + K_2O$,
0 to 5% $B_2O_3$;
0.05 to 1.0% total iron oxide (T-$Fe_2O_3$) in terms of $Fe_2O_3$,
0.05 to 2.0% $CeO_2$,
0 to 1.0% $TiO_2$,
0 to 0.005% CoO, and
0 to 0.005% Se,

with ultraviolet light to increase the content of FeO in the irradiated glass by reducing Fe(III) to Fe(II), the UV irradiated glass thereby comprising 0.02 to 0.5 wt.% FeO in terms of $Fe_2O_3$.

Preferably, the infrared absorbing glass comprises, in % by weight:

0.2 to 0.6% T-$Fe_2O_3$ in terms of $Fe_2O_3$;
0.02 to 0.3% FeO in terms of $Fe_2O_3$;
0.2 to 2.0% $CeO_2$; and
0.0005 to 0.005% Se,

wherein a relationship between the transmission at 1,050 nm ($T_{1050}$) and the transmission at 1,200 nm ($T_{1200}$) is $T_{1050} > T_{1200}$.

Preferably, the infrared absorbing glass comprises, in % by weight, 0.05 to 3% total of one or more components selected from $CeO_2$, $Sb_2O_3$, $As_2O_3$, SnO, and $Cu_2O$.

The infrared radiation absorbing glasses of the present invention preferably have a visible light transmission of 70% or more as measured with the CIE standard illuminant A and a total solar energy transmission of less than 70% as measured in the wavelength region of from 300 to 2,100 nm, when the thickness of the glass is 4 mm.

It is also preferred that the infrared radiation absorbing glasses according to the present invention have a dominant wavelength of 574 to 580 nm as measured with the CIE standard illuminant C and a total sunlight UV transmission of less than 12% as measured in a wavelength region of 297.5 to 377.5 nm according to ISO, when the thickness of the glasses is 4 mm.

It is further preferred that the infrared radiation absorbing glasses according to the present invention have an ultraviolet transmission of less than 34% at a wavelength of 370 nm, when the thickness of the glasses is 4 mm.

## DETAILED DESCRIPTION OF THE INVENTION

The reasons for limitation of the glass compositions of the infrared radiation absorbing glass according to the present invention are explained below. Hereinafter, unless otherwise indicated, all the percents are by weight.

Iron oxide is present in glass in the form of $Fe_2O_3$ ($Fe^{3+}$) and FeO ($Fe^{2+}$). $Fe_2O_3$ is a component serving to increase an infrared absorbing power, while FeO is a component serving to increase an ultraviolet absorbing power

together with $CeO_2$ and $TiO_2$.

In general soda lime silica glass composition used as window glass of buildings and vehicles, $Fe^{2+}$ shows its absorption peak at about 1,050 nm and also has an absorption in the visible light region of from 400 to 780 nm. Therefore, if the FeO content is increased, the infrared absorbing power is increased, but a visible light transmission is simultaneously decreased. The gist of the present invention resides in shifting the absorption peak wavelength of $Fe^{2+}$ to a longer wavelength side to minimize the decrease in visible light transmission, thereby achieving both a high infrared absorbing power and a high visible light transmission at a time.

The absorption peak wavelength of $Fe^{2+}$ is shifted to the longer wavelength side by irradiating the glass with ultraviolet light at around room temperature.

The inventors of the present invention have found that ultraviolet irradiation of appropriate glass containing $Fe_2O_3$ under appropriate conditions easily results in formation of $Fe^{2+}$ having its absorption peak wavelength shifted to the longer wavelength side. Specifically, when glass containing a component acting as a photo-reducing agent, such as $Ce^{3+}$, and $Fe^{3+}$ is irradiated with UV at around room temperature, $Fe^{2+}$ is formed through the reaction: $Fe^{3+} + e^- \rightarrow Fe^{2+}$. While the absorption peak of $Fe^{2+}$ in a general soda lime silica glass composition for windows is at about 1050 nm, that of the $Fe^{2+}$ newly formed in glass on ultraviolet irradiation is shifted to the longer wavelenth side, i.e., at about 1,200 nm or even more. This is because the thus formed $Fe^{2+}$ is surrounded by a distorted structure. The absorption peak of glass in an infrared region after ultraviolet irradiation is determined by the overlap between the absorption of the originally present $Fe^{2+}$ before irradiation and the absorption of the newly formed $Fe^{2+}$ after irradiation, and is usually at a wavelength of from 1,100 to 1,250 nm, although varying depending on the glass composition, ultraviolet irradiation conditions, and the like. Ultraviolet irradiation is preferably conducted by using ultraviolet light of 400 nm or less such that an irradiation energy (a product of an irradiation energy density per unit time per unit area and an irradiation time) is $10^5$ $J/m^2$ or more.

The shift of the absorption peak wavelength to the longer wavelength side can be evaluated by comparing the transmissions at the peak wavelength. In the present invention, the shift is expressed in terms of change in the wavelength at which the transmission has the minimum value in the range of from 900 to 1,600 nm ($\lambda_p$) or in terms of the comparison between the transmission at 1,050 nm ($T_{1050}$) and the transmission at 1,200 nm ($T_{1200}$). $\lambda_p$ is obtained, for example, as the minimum value of a transmission curve obtained by subjecting general smoothing treatment to the transmission data measured for each 2 nm or smaller.

If the total iron oxide ($T-Fe_2O_3$) content is too small, the infrared absorption power and ultraviolet absorbing power are decresed. If it is too large, the visible light transmission is decreased. Accordingly, the $T-Fe_2O_3$ content is from 0.05 to 1.0%. In the glass composition containing Se, for the formation of a bronze tint, the $T-Fe_2O_3$ content is preferably 0.2 to 0.6%.

If the FeO content is too small, the infrared absorbing power is descreased, and if it is too large, a visible light transmission is decreased. Accordingly, the FeO content is from 0.02 to 0.5%, in terms of $Fe_2O_3$. In the glass composition containing Se, for the formation of a bronze tint, the FeO content preferably is from 0.02 to 0.3%.

$CeO_2$ is a component for enhancing ultraviolet absorption. It exists in glass in the form of $Ce^{3+}$ or $Ce^{4+}$. While $Ce^{3+}$ shows weak absorption in the visible region and is more effective for UV absorption, it is an important component for its function as a photo-reducing agent in the present invention. Specifically, when glass containing $Ce^{3+}$ is irradiated with ultraviolet light at around room temperature, $Ce^{3+}$ acts as a photo-reducing agent, emitting an electron through the reaction: $Ce^{3+} \rightarrow Ce^{4+} + e^-$. The thus emitted electron functions in the reaction: $Fe^{3+} + e^- \rightarrow Fe^{2+}$, in which $Fe_2O_3$ is reduced to form FeO. As described above, the thus formed FeO has its infrared absorption peak at a wavelength of about 1,200 nm or longer, which is a wavelength shifted to the long wavelength side as compared with about 1,050 nm of the FeO formed by a melt method in the production of general soda lime silica glass for windows. As a result, the glass after ultraviolet irradiation has an absorption peak in the infrared region at a wavelength of from about 1,100 to 1,250 nm, and thus can exhibit improved infrared absorbing power while minimizing the decrease in visible light transmission. The $CeO_2$ content should be 2.0% or less. If the $CeO_2$ content is too large, the absorption in the short wavelength side in the visible region is so large that the resulting glass assumes a yellow tint. To ensure a satisfactory function as a photo-reducing agent and to obtain an ultraviolet absorbing power, the $CeO_2$ content is 0.05 to 2.0%, and more preferably 0.2 to 2.0%.

$SiO_2$ is a main component for forming a skeleton of the glass. If the $SiO_2$ content is less than 65%, the glass has a reduced durability. If it exceeds 80%, it is difficult to melt the glass composition.

$A\ell_2O_3$ serves to improve durability of glass. If the $A\ell_2O_3$ content exceeds 5%, it is difficult to melt the glass composition. A preferred $A\ell_2O_3$ content is from 0.1 to 2%.

MgO and CaO both serve to improve durability of glass and also to control the devitrification temperature and viscosity in forming the glass. If the MgO content exceeds 10%, the devitrification temperature rises. If the CaO content is less than 5% or higher than 15%, the devitrification temperature rises. If the total content of MgO and CaO is less than 5%, the resulting glass has reduced durability. If the total content exceeds 15%, the devitrification temperature rises.

## EP 0 811 581 B1

$Na_2O$ and $K_2O$ are used as a glass melting accelerator. If the $Na_2O$ content is less than 10%, or if the total content of $Na_2O$ and $K_2O$ is less than 10%, the effect of melting acceleration is weak. If $Na_2O$ content exceeds 18%, or if the total content of $Na_2O$ and $K_2O$ exceeds 20%, durability of glass is decreased. $K_2O$ is effective to enhance the pink color development of Se and simultaneously to increase the ultraviolet absorbing power. It is unfavorable for the $K_2O$ content to exceed 5% because it is more expensive than $Na_2O$.

While $B_2O_3$ is a component used for the improvement of durability of glass and also as a melting aid, it also functions to enhance ultraviolet absorption. If the $B_2O_3$ content exceeds 5.0%, decrease in the light transmission in the ultraviolet region is also extended to the visible region, and the glass tends to assume a yellow tint. Moreover, disadvantages occur due to vaporization of $B_2O_3$ in forming glass. Accordingly, the upper limit of the $B_2O_3$ content should be 5.0%.

$TiO_2$ is a component for increasing ultraviolet absorbing power through the mutual action especially with FeO. If the $TiO_2$ content exceeds 1.0%, the glass assumes a yellow tint.

CoO is a component which develops a bronze color in the presence of Se. If the CoO content exceeds 0.005%, the visible light transmission is reduced.

Se develops a pink tint to thereby provide a bronze tint coupled with CoO which has a complementary color to the pink tint. If the Se content is less than 0.0005%, a desired color cannot be obtained. If it exceeds 0.005%, the visible light transmission is reduced.

$Sb_2O_3$, $As_2O_3$, SnO, and $Cu_2O$ function as a photo-reducing agent similar to $CeO_2$ or serve to accelerate the reducing action of $CeO_2$. If the total content of any one or more of these 5 components (inclusive of $CeO_2$) is less than 0.05%, the photo-reducing effect is small. The upper limit of the total content of the 5 components is 3% because of their expensiveness.

So long as the effect as aimed at in each embodiment of the present invention is not impaired, the glass composition according to the present invention may further contain one or more of ZnO, $Bi_2O_3$, NiO, MnO, $V_2O_5$, and $MoO_3$ in a total amount of up to 1%; one or more of F, Cl, and Br in a total amount of up to 1%; and up to 1% of S in terms of $SO_3$.

The present invention is described in greater detail below by reference to the following Examples, but it should be understood that the invention is not construed as being limited thereto.

EXAMPLES 1 TO 5 AND COMPARATIVE EXAMPLES 1 TO 4

Siliceous sand, dolomite, limestone, soda ash, potassium carbonate, boron oxide, borax, ferric oxide, titanium oxide, cerium oxide, cobalt oxide, sodium selenite, and a carbonaceous material as a reducing agent were compounded at an appropriate ratio so as to obtain a prescribed glass composition. The resulting blend was melted at 1,500°C for 4 hours in an electric furnace, and the molten glass was cast on a stainless steel plate and gradually cooled to room temperature to obtain a glass plate having a thickness of about 6 mm. This glass plate was polished to a thickness of 4 mm to prepare a glass sample.

A visible light transmission (YA) measured with the CIE standard illuminant A, a total solar energy transmission (TG), an ultraviolet transmission ($T_{UV}$) specified by ISO, and a dominant wavelength (Dw) and an excitation purity (Pe) measured with the CIE standard illuminant C of the resulting glass sample were obtained. As an additional measure for ultraviolet transmission, an ultraviolet transmission at 370 nm ($T_{370}$), at which the change in transmission sensitively appears in the course of the steep rise from the absorption end of the transmission curve, was also measured.

The sample was then irradiated with ultraviolet light of 400 nm or shorter using a sunshine carbon arc lamp at an energy density of $1.43 \times 10^6$ $J/m^2/hr$ for a prescribed irradiation time to give a prescribed UV energy Q ($J/m^2$), a product of the energy density and an irradiation time. After the ultraviolet irradiation, the above-described optical characteristics were measured again. The change in absorption peak wavelength of FeO due to ultraviolet irradiation was evaluated from the transmissions at 1,050 nm and 1,200 nm ($T_{1050}$, $T_{1200}$) and the wavelength at which the transmission has the minimum value in the range of from 900 to 1,600 nm ($\lambda_p$).

The concentrations of each component and optical characteristics of the ultraviolet irradiated samples and the ultraviolet irradiation energy (Examples 1 to 5) are shown in Table 1 below.

The concentrations of each component and optical characteristics of the samples before ultraviolet irradiation (Comparative Examples 1 to 4) are shown in Table 2 below. Comparative Example 1 corresponds to Example 1; Comparative Example 2 to Example 2; Comparative Example 3 to Examples 3 and 4; and Comparative Example 4 to Example 5.

All the concentrations shown in the Tables are expressed in % by weight.

TABLE 1

| | Example 1 | Example 2 | Example 3 | Example 4 | Example 5 |
|---|---|---|---|---|---|
| Composition (wt%): | | | | | |
| $SiO_2$ | 71.3 | 70.5 | 70.5 | 70.5 | 70.5 |
| $B_2O_3$ | 0 | 1.0 | 0 | 0 | 0 |
| $Al_2O_3$ | 1.6 | 1.5 | 1.5 | 1.5 | 1.5 |
| MgO | 3.64 | 4.0 | 4.0 | 4.0 | 3.46 |
| CaO | 7.8 | 8.0 | 8.0 | 8.0 | 8.0 |
| $Na_2O$ | 12.5 | 13.0 | 13.0 | 13.0 | 13.0 |
| $K_2O$ | 0.6 | 0.7 | 0.7 | 0.7 | 1.3 |
| $CeO_2$ | 1.6 | 1.55 | 1.75 | 1.75 | 1.7 |
| $TiO_2$ | 0.33 | 0.03 | 0.23 | 0.23 | 0.10 |
| CoO | 0 | 0 | 0.0011 | 0.0011 | 0.0017 |
| SeO | 0 | 0 | 0.0011 | 0.0011 | 0.0011 |
| $T\text{-}Fe_2O_3$ | 0.63 | 0.7 | 0.35 | 0.35 | 0.42 |
| FeO | 0.24 | 0.23 | 0.071 | 0.079 | 0.078 |
| Optical Characteristics: | | | | | |
| YA (%) | 70.0 | 70.1 | 72.2 | 72.0 | 71.8 |
| TG (nm) | 40.6 | 42.3 | 63.1 | 61.6 | 61.8 |
| Dw (%) | 527 | 525 | 577 | 577 | 576 |
| Pe (%) | 2.9 | 2.5 | 7.7 | 7.7 | 7.6 |
| $T_{UV}$ (%) | 6.7 | 7.2 | 8.4 | 7.8 | 6.9 |
| $T_{370}$ (%) | 19.1 | 21.1 | 23.9 | 22.0 | 19.5 |
| $T_{1050}$ (%) | 12.8 | 14.7 | 52.4 | 48.6 | 49.5 |
| $T_{1200}$ (%) | 13.1 | 14.8 | 51.4 | 46.9 | 47.3 |
| $\lambda_p$ (nm) | 1110 | 1110 | 1200 | 1210 | 1220 |
| Q $(J/m^2)$ | $1.5 \times 10^8$ | $1.5 \times 10^8$ | $2.9 \times 10^6$ | $3.6 \times 10^7$ | $2.0 \times 10^8$ |

TABLE 2

| | Compara. Example 1 | Compara. Example 2 | Compara. Example 3 | Compara. Example 4 |
|---|---|---|---|---|
| Composition (wt%): | | | | |
| $SiO_2$ | 71.3 | 70.5 | 70.5 | 70.5 |
| $B_2O_3$ | 0 | 1.0 | 0 | 0 |
| $Al_2O_3$ | 1.6 | 1.5 | 1.5 | 1.5 |
| MgO | 3.64 | 4.0 | 4.0 | 3.46 |
| CaO | 7.8 | 8.0 | 8.0 | 8.0 |
| $Na_2O$ | 12.5 | 13.0 | 13.0 | 13.0 |
| $K_2O$ | 0.6 | 0.7 | 0.7 | 1.3 |
| $CeO_2$ | 1.6 | 1.55 | 1.75 | 1.7 |
| $TiO_2$ | 0.33 | 0.03 | 0.23 | 0.10 |
| CoO | 0 | 0 | 0.0011 | 0.0017 |
| SeO | 0 | 0 | 0.0011 | 0.0011 |
| $T\text{-}Fe_2O_3$ | 0.63 | 0.7 | 0.35 | 0.42 |
| FeO | 0.17 | 0.18 | 0.054 | 0.x045 |
| Optical Characteristics: | | | | |
| YA (%) | 73.0 | 71.8 | 72.8 | 73.0 |

TABLE 2 (continued)

|  | Compara. Example 1 | Compara. Example 2 | Compara. Example 3 | Compara. Example 4 |
|---|---|---|---|---|
| Optical Characteristics: |  |  |  |  |
| TG (nm) | 45.2 | 44.7 | 66.9 | 68.9 |
| Dw (%) | 534 | 524 | 578 | 578 |
| Pe (%) | 3.1 | 2.5 | 7.6 | 8.2 |
| $T_{UV}$ (%) | 7.7 | 8.1 | 9.2 | 8.6 |
| $T_{370}$ (%) | 22.5 | 24.0 | 26.1 | 25.1 |
| $T_{1050}$ (%) | 17.9 | 17.3 | 60.1 | 64.8 |
| $T_{1200}$ (%) | 19.2 | 18.4 | 60.7 | 65.9 |
| $\lambda_p$ (nm) | 1050 | 1050 | 1050 | 1050 |

As is apparent from the results in Tables 1 and 2 above, every sample according to the present invention has an absorption peak wavelength ($\lambda_p$) of FeO shifted to the long wavelength side as compared with the corresponding comparative sample. As a result, the proportion of the FeO's absorption reaching to the visible light region is decreased, and the decrease in visible light transmission (YA) is smaller than the decrease in total solar energy transmission (TG) due to ultraviolet irradiation. It is thus understood that the glass exhibiting a visible light transmission comparable to and an infrared absorbing power higher than those of the nonirradiated glass.

The infrared radiation absorbing glass according to the present invention has an infrared absorption peak at a wavelength of 1,100 nm or longer and therefore exhibits excellent infrared absorbing power and a high visible light transmission.

Further, due to such high infrared absorption power and visible light transmission, the infrared radiation absorbing glass of the present invention is excellent in reducing the load of air conditioning while securing a comfortable visual field when applied to windows of vehicles, e.g., automobiles, or buildings.

While the invention has been described in detail and with reference to specific examples thereof, it will be apparent to one skilled in the art that various changes and modifications can be made therein without departing from the scope thereof.

## Claims

1. A method for shifting the absorption peak wavelength in the wavelength range 900-1600 nm of an infrared absorbing glass from less than 1100 nm to 1100 nm or longer, comprising the step of irradiating the glass which comprises by wt.%:

   65 to 80% $SiO_2$,
   0 to 5% $A\ell_2O_3$,
   0 to 10% MgO,
   5 to 15% CaO,
   10 to 18% $Na_2O$,
   0 to 5% $K_2O$,
   5 to 15% MgO + CaO,
   10 to 20% $Na_2O + K_2O$,
   0 to 5% $B_2O_3$;
   0.05 to 1.0% total iron oxide (T-$Fe_2O_3$) in terms of $Fe_2O_3$,
   0.05 to 2.0% $CeO_2$,
   0 to 1.0% $TiO_2$,
   0 to 0.005% CoO, and
   0 to 0.005% Se,

   with ultraviolet light to increase the content of FeO in the irradiated glass by reducing Fe(III) to Fe(II), the UV irradiated glass thereby comprising 0.02 to 0.5 wt.% FeO in terms of $Fe_2O_3$.

**2.** A method according to Claim 1, wherein the infrared absorbing glass comprises, in % by weight:

0.2 to 0.6% T-$Fe_2O_3$ in terms of $Fe_2O_3$;
0.02 to 0.3% FeO in terms of $Fe_2O_3$;
0.2 to 2.0% $CeO_2$; and
0.0005 to 0.005% Se,

wherein the relationship between the transmission at 1,050 nm ($T_{1050}$) and the transmission at 1,200 nm ($T_{1200}$) is $T_{1050} > T_{1200}$.

**3.** A method according to Claim 1, wherein the infrared absorbing glass comprises, in % by weight, 0.05 to 3% total of one or more components selected from $CeO_2$, $Sb_2O_3$, $As_2O_3$, SnO, and $Cu_2O$.

**Patentansprüche**

**1.** Verfahren zur Verschiebung der Wellenlänge des Absorptionspeaks im Wellenlängenbereich 900 bis 1.600 nm eines Infrarot absorbierenden Glases von weniger als 1.100 nm auf 1.100 nm oder länger, umfassend den Schritt der Bestrahlung des Glases, das in Gew.% umfasst:

65 bis 80 % $SiO_2$,
0 bis 5 % $Al_2O_3$,
0 bis 10 % MgO,
5 bis 15 % CaO,
10 bis 18 % $Na_2O$,
0 bis 5 % $K_2O$,
5 bis 15 % MgO + CaO,
10 bis 20 % $Na_2O$ + $K_2O$,
0 bis 5 % $B_2O_3$;
0,05 bis 1,0 % Eisenoxid insgesamt (T-$Fe_2O_3$), bezogen auf $Fe_2O_3$,
0,05 bis 2,0 % $CeO_2$,
0 bis 1,0 % $TiO_2$,
0 bis 0,005 % CoO und
0 bis 0,005 % Se,

mit Ultraviolettlicht zur Erhöhung des Gehalts von FeO im bestrahlten Glas durch Reduktion von Fe(III) zu Fe(II), wobei das UV-bestrahlte Glas hierdurch 0,02 bis 0,5 Gew.% FeO, bezogen auf $Fe_2O_3$, umfasst.

**2.** Verfahren gemäss Anspruch 1, wobei das Infrarot absorbierende Glas in Gew.% umfasst:

0,2 bis 0,6 % T-$Fe_2O_3$, bezogen auf $Fe_2O_3$;
0,02 bis 0,3 % FeO, bezogen auf $Fe_2O_3$;
0,2 bis 2,0 % $CeO_2$; und
0,0005 bis 0,005 % Se,

wobei die Beziehung zwischen der Transmission bei 1.050 nm ($T_{1050}$) und der Transmission bei 1.200 nm ($T_{1200}$) $T_{1050} > T_{1200}$ ist.

**3.** Verfahren gemäss Anspruch 1, wobei das Infrarot absorbierende Glas in Gew.% insgesamt 0,05 bis 3 % von einem oder mehreren Komponenten, ausgewählt aus $CeO_2$, $Sb_2O_3$, $As_2O_3$, SnO und $Cu_2O$ umfasst.

**Revendications**

**1.** Procédé pour déplacer le pic d'absorption de longueurs d'onde dans la plage de longueurs d'onde 900 - 1600 nm d'un verre absorbant les infrarouges de moins de 1100 nm à 1100 nm ou plus, comprenant l'étape consistant à irradier le verre qui comprend en % en poids :

65 à 80% de $SiO_2$,
0 à 5% de $A\ell_2O_3$,
0 à 10% de MgO,
5 à 15% de CaO
10 à 18% de $Na_2O$,
0 à 5% de $K_2O$,
5 à 15% de MgO + CaO,
10 à 20% de $Na_2O + K_2O$,
0 à 5% de $B_2O_3$ ;
0,05 à 1,0% d'oxyde de fer total ($T\text{-}Fe_2O_3$) en termes de $Fe_2O_3$,
0,05 à 2,0% de $CeO_2$,
0 à 1,0% de $TiO_2$,
0 à 0,005% de CoO, et
0 à 0,005% de Se,

par la lumière ultraviolette pour augmenter la quantité de FeO dans le verre irradié en réduisant Fe (III) en Fe (II), le verre irradié par UV comprenant ainsi 0,02 à 0,5% en poids de FeO en termes de $Fe_2O_3$.

**2.** Procédé selon la revendication 1, dans lequel le verre absorbant les infrarouges comprend, en % en poids :

0,2 à 0,6% de $T\text{-}Fe_2O_3$ en termes de $Fe_2O_3$ ;
0,02 à 0,3% de FeO en termes de $Fe_2O_3$ ;
0,2 à 2,0% de $CeO_2$ ; et
0,0005 à 0,005% de Se,

dans lequel la relation entre la transmission à 1050 nm ($T_{1050}$) et la transmission à 1200 nm ($T_{1200}$) est $T_{1050} > T_{1200}$.

**3.** Procédé selon la revendication 1, dans lequel le verre absorbant les infrarouges comprend, en % en poids, 0,05 à 3% au total de un ou plusieurs composants choisis parmi $CeO_2$, $Sb_2O_3$, $As_2O_3$, SnO et $Cu_2O$.